# EUROPÄISCHE PATENTSCHRIFT

(11) **EP 3 509 935 B1**
(45) Veröffentlichungstag und Bekanntmachung des Hinweises auf die Patenterteilung: **11.11.2020**
(21) Anmeldenummer: 17743289.5
(22) Anmeldetag: 14.07.2017
(51) Int. Cl.: B62M 6/55, B62M 11/14

(54) **ANTRIEBSANORDNUNG UND FAHRZEUG**
DRIVE ASSEMBLY AND VEHICLE
SYSTÈME DE PROPULSION ET VÉHICULE

(30) Priorität: 08.09.2016 DE 102016217154
(43) Veröffentlichungstag der Anmeldung: 17.07.2019
(73) Patentinhaber: Robert Bosch GmbH, 70442 Stuttgart (DE)
(72) Erfinder: HINTERKAUSEN, Markus, 71696 Moeglingen (DE); KIMMICH, Peter, 71144 Steinenbronn (DE)
(86) Internationale Anmeldenummer: PCT/EP2017/067802
(87) Internationale Veröffentlichungsnummer: WO 2018/046172

(56) Entgegenhaltungen:
- EP-A2- 0 968 912
- WO-A1-2014/170061
- DE-A1-102010 051 727
- DE-A1-102013 013 881

## Beschreibung

### Stand der Technik

Die vorliegende Erfindung betrifft eine Antriebsanordnung und ein Fahrzeug. Die vorliegende Erfindung betrifft insbesondere eine Antriebsanordnung eines mit Motorkraft und - gegebenenfalls zusätzlich - mit Muskelkraft antreibbaren Fahrzeuges, eines Elektrofahrrades, eBikes oder Pedelecs sowie ein mit Motorkraft und - gegebenenfalls zusätzlich - mit Muskelkraft antreibbares Fahrzeug als solches, insbesondere ein Elektrofahrrad, eBike oder Pedelec.

Oft werden Fahrräder, Elektrofahrräder und dergleichen am angetriebenen Hinterrad mit einer Ketten- oder Nabenschaltung ausgebildet. Alternativ dazu können auch Tretlagerantriebe mit einem integrierten Schaltgetriebe vorgesehen werden.

Problematisch ist bei bekannten Antriebsanordnungen mit am Tretlager angeordneten Schaltgetrieben deren gesteigerte Größe, die bei durch Motor betriebenen Schaltmechanismen zusätzlich zum Gewicht weiter gesteigert ist.

Die Schrift WO 2014/170061 A1 offenbart ein Elektrofahrrad, umfassend ein Reibgetriebe zur stufenlosen Änderung eines Übersetzungsverhältnisses.

Die Schrift DE 10 2010 051 727 A1 offenbart eine Antriebseinheit für ein mit Muskelkraft angetriebenes Fahrzeug, wobei eine Getriebewellen mit einer Motorwelle einer elektrischen Maschine verbunden oder verbindbar ist, um ein Drehmoment in das Getriebe ein- oder aus dem Getriebe auszukoppeln.

### Offenbarung der Erfindung

Die erfindungsgemäße Antriebsanordnung mit den Merkmalen des Anspruchs 1 weist demgegenüber den Vorteil auf, dass bei vergleichsweise kleinem Bauraum im Bereich des Tretlagers ein motorisch unterstützter Schaltmechanismus mit reduziertem Gewicht realisiert ist. Dies wird erfindungsgemäß mit den Merkmalen des unabhängigen Anspruches 1 dadurch erreicht, dass eine Antriebsanordnung für ein mit Motorkraft und insbesondere zusätzlich mit Muskelkraft antreibbares Fahrzeug, ein Elektrofahrrad, eBike oder Pedelec, geschaffen wird mit einem elektrischen Antrieb zum Erzeugen eines Motordrehmoments, einer um eine Drehachse Y drehbaren Kurbelwelle zum Aufnehmen zumindest des Motordrehmomentes, einer Übertragungseinrichtung, welche zum Übertragen eines von der Kurbelwelle aufgenommenen Drehmomentes an ein mit einem Antriebsrad des Fahrzeuges koppelbares Abtriebselement und zu einer schaltbar variablen Übersetzung ausgebildet ist, und eine Verstellvorrichtung, welcher mit der Übertragungseinrichtung gekoppelt ist und durch dessen Betätigung die Übersetzung der Übertragungseinrichtung einstellbar ist, bei welcher der elektrische Antrieb zur Betätigung der Verstellvorrichtung ausgebildet und insbesondere zur Übertragung zumindest eines Teils des Motordrehmoments mit der Verstellvorrichtung koppelbar ist. Dabei besteht ein Kernaspekt der vorliegenden Erfindung darin, den elektrischen Antrieb der Antriebsanordnung zur Unterstützung des Fahrers bei der Fortbewegung des zu Grunde liegenden Fahrzeugs gleichzeitig auch für den Betrieb der Verstellvorrichtung für die Übertragungseinrichtung zur Variation der Übersetzung der Übertragungseinrichtung einzusetzen. Durch diese Maßnahme entfällt die Notwendigkeit, einen zusätzlichen Motor für den Betrieb der Verstellvorrichtung vorzusehen. Dies spart Bauraum und Gewicht bei der erfindungsgemäßen Antriebsanordnung und liefert wegen des Wegfalls eines weiteren Motors einen geräuschreduzierten Betrieb.

Die Unteransprüche zeigen bevorzugte Weiterbildungen der Erfindung.

Besonders zuverlässig gestaltet sich die Kopplung des elektrischen Antriebs mit der Verstellvorrichtung bei einer bevorzugten Ausführungsform der erfindungsgemäßen Antriebsanordnung, wenn zur Kopplung des elektrischen Antriebs mit der Verstellvorrichtung ein zuschaltbares Koppelgetriebe ausgebildet ist.

Es bieten sich verschiedene Ausgestaltungsformen der Kopplung zwischen elektrischem Antrieb und dem zuschaltbaren Koppelgetriebe an. Bei einer bevorzugten Ausgestaltungsform der erfindungsgemäßen Antriebsanordnung weist der elektrische Antrieb eine Motorwelle auf und das Koppelgetriebe ist direkt an die Motorwelle und/oder indirekt über ein an die Motorwelle gekoppeltes oder koppelbares Motorreduziergetriebe und insbesondere über eine Stirnradstufe davon gekoppelt oder koppelbar, insbesondere über eine in Bezug auf das Koppelgetriebe eingangsseitige Stirnradstufe.

Auch die Ausgestaltung des Koppelgetriebes als solche bietet verschiedene Möglichkeiten.

Zum Beispiel kann das Koppelgetriebe als Planetengetriebe ausgebildet sein. Durch diese Maßnahme ergibt sich eine besonders verlustfreie Ankopplung des aus dem elektrischen Antrieb ausgekoppelten Teils des Motordrehmoments an die Verstellvorrichtung.

Das Planetengetriebe des so ausgestalteten Koppelgetriebes kann einen Planetenträger mit Planeten aufweisen, welcher insbesondere in Bezug auf das Koppelgetriebe eingangsseitig mit dem elektrischen Antrieb direkt oder indirekt koppelbar oder gekoppelt ist.

Die konkrete Ausgestaltung der Ankopplung des Koppelgetriebes an die Verstellvorrichtung kann ebenfalls in verschiedener Weise variiert werden.

Bei einer bevorzugten Ausführungsform der Antriebsanordnung weist das Planetengetriebe des Koppelgetriebes ein gemeinsames Hohlrad zum Innenumlauf für die Planeten auf. Das Hohlrad ist insbesondere in Bezug auf das Koppelgetriebe ausgangsseitig direkt oder indirekt mit der Verstellvorrichtung koppelbar oder gekoppelt ist, vorzugsweise nach Art stirnradbildenden Außenverzahnung am Hohlrad und/oder über eine mit dem Hohlrad drehfest verbundene Stirnradstufe.

Alternativ oder zusätzlich kann die Kopplung der Verstellvorrichtung an den elektrischen Antrieb und insbesondere zur Kopplung an das Koppelgetriebe mit einem Koppelmechanismus mit einer rotierbaren Spindel, einer die Spindel umschließender und mit Rotation der Spindel auf der Spindel verschieblichen Spindelmutter und insbesondere mit an der Spindelmutter angebrachtem Verbindungselement zur Verbindung mit der Verstellvorrichtung ausgebildet sein.

In diesem Fall ergibt sich eine besonders verlustfreie Übertragung des ausgekoppelten Motordrehmoments an die Verstellvorrichtung, wenn die Spindel eingangsseitig eine Stirnradstufe aufweist, insbesondere zur Kopplung mit der Ausgangsseite des Koppelgetriebes, vorzugsweise mit der ausgangsseitigen Stirnradstufe des Hohlrades des Planetengetriebes des Koppelgetriebes.

Die Schaltbarkeit der Kopplung des elektrischen Antriebs an die Verstellvorrichtung lässt sich auf vielfältige Weise realisieren.

Eine besonders verlustfreie Übertragung des vom elektrischen Antrieb ausgekoppelten Anteils des Motordrehmoments an die Verstellvorrichtung ergibt sich dann, wenn für die Schaltbarkeit der Kopplung des elektrischen Antriebs an die Verstellvorrichtung eine steuerbar schaltbare Kupplung ausgebildet ist, welche insbesondere zwischen dem Sonnenrad des Planetengetriebes des Koppelgetriebes und einem drehfesten Bereich der Antriebsanordnung, insbesondere einem Gehäuse, angeordnet ist, gesteuert mindestens einen gekoppelten und einen entkoppelten Zustand einnehmen kann, wobei im gekoppelten Zustand das Sonnenrad des Planetengetriebes zur Übertragung zumindest eines Teils des Motordrehmoments drehfest gehaltert ist und wobei im entkoppelten Zustand das Sonnenrad des Planetengetriebes ohne Übertragung von Motordrehmoment frei rotierbar ist.

Eine besonders kompakte Bauweise wird bei der erfindungsgemäßen Antriebsanordnung erreicht, wenn diese als Mittelmotorantrieb und insbesondere mit einem Gehäuse ausgebildet ist, in welchem die Übertragungseinrichtung, die Verstellvorrichtung, der elektrische Antrieb, das Motorreduziergetriebe und zumindest ein Teil Kurbelwelle aufgenommen sind.

Nachfolgend werden weitere Aspekte der vorliegenden Erfindung vorgestellt, insbesondere im Zusammenhang mit der Übertragungseinrichtung und deren Ausgestaltungsformen:
Bei den - insbesondere in der Übertragungseinrichtung - ausgebildeten Planetengetrieben können jeweilige Sonnenräder Mitnehmerelementen vorgesehen sein, um zum Beispiel Freilauf und Antrieb zu steuern.

Dabei kann ein erfindungsgemäß jeweilig vorgesehenes Mitnehmerelement in Bezug auf die Drehachse eines Sonnenrades auch radial innerhalb, aber axial außerhalb des Sonnenrades eines zu Grunde liegenden Planetenschaltgetriebes ausgebildet sein. Bei größeren Sonnenrädern können sich die Mitnehmerelemente innerhalb des Radius der Sonnenräder, aber seitlich davon beabstandet befinden und dennoch im Vergleich zu den üblichen Klinken oder Ziehkeilen achsfern mit den entsprechenden Vorteilen bezüglich der Kräfte angeordnet sein.

Bei einer besonders zuverlässigen Weiterbildung der erfindungsgemäßen Antriebsanordnung ist das Mitnehmerelement jeweils an einem oder als ein radial außen liegender oder äußerster Abschnitt eines mit dem jeweiligen Sonnenrad drehfest gekoppelten Schaltfingers ausgebildet. Auf diese Weise kann die Struktur des Mitnehmerelements unabhängig von der Kopplung an das Sonnenrad in geeigneter Weise ausgestaltet werden, um einen Gangwechsel besonders zuverlässig auszuführen.

Des Weiteren ist bei einer vorteilhaften Weiterbildung eine koaxiale Anordnung eines etwaig vorgesehenen mehrstufigen Planetenschaltgetriebes zur Drehachse und somit zur Kurbelwelle besonders platzsparend und führt zu einer vergleichsweise kompakten Bauform.

Die kompakte Bauweise der erfindungsgemäßen Antriebsanordnung im Sinne eines Tretlagerschaltgetriebes kann alternativ oder zusätzlich gesteigert werden, indem etwaig vorgesehenes mehrstufiges Planetenschaltgetriebe auch zu einem rotationssymmetrisch ausgebildeten Abtriebselement koaxial ausgebildet wird, so dass sich eine Anordnung ergibt, bei welcher das Abtriebselement als rotationssymmetrische Komponente koaxial zur Drehachse der Kurbelwelle und zum Planetengetriebe ausgebildet ist. Das Abtriebselement kann vorzugsweise als Kettenblatt oder Zahnriemenblatt, je nach Antriebsart, ausgebildet sein.

Den Getriebeschaltstufen kann insbesondere eine Hochtreiberstufe mit einem oder in Form eines Planetengetriebes mit Übersetzung ins Schnelle zur Reduktion eines hohen Fahrerdrehmomentes eingangsseitig vorgeschaltet sein.

Alternativ oder zusätzlich können etwaig vorgesehene und in Reihe geschaltete Planetengetriebe der Getriebeschaltstufen über ein gemeinsames Hohlrad miteinander gekoppelt sein.

Bei einer anderen vorteilhaften Ausgestaltungsform der erfindungsgemäßen Antriebsanordnung wird ein besonders zuverlässiger Gangwechsel dadurch ermöglicht, dass dieser über eine Verstellvorrichtung durchführbar ist, insbesondere mittels einer in Bezug auf die Drehachse der Kurbelwelle und/oder der Sonnenräder radial beabstandeten und gesteuert achsenparallel positionierbaren Schaltkulisse mit einer Mehrzahl von Anschlagselementen für die Mitnehmerelemente.

Bei einer bevorzugten Ausgestaltungsform der erfindungsgemäßen Antriebsanordnung ist es dazu vorgesehen, dass zwischen dem elektrischen Antrieb und dem Planetengetriebe ein Motorreduziergetriebe in Form eines mehrstufigen Stirnradgetriebes ausgebildet ist.

Ein radial besonders kompakter Aufbau ergibt sich, wenn gemäß einer alternativen Ausgestaltungsform der erfindungsgemäßen Antriebsanordnung zwischen dem elektrischen Antrieb und dem Planetengetriebe ein Motorreduziergetriebe in Form eines Evoloidgetriebes ausgebildet ist. Diese kann innen- oder außenverzahnt ausgebildet sein.

Unabhängig von der Art und Weise, wie das Motorreduziergetriebe konfiguriert ist, ist es von besonderem Vorteil, wenn ein, mehrere oder sämtliche Komponenten des jeweiligen Motorreduziergetriebes mit oder aus einem Kunststoffmaterial gefertigt sind. Damit lassen sich die Betriebsgeräusche und/oder deren Übertragung bei der erfindungsgemäßen Antriebsanordnung weiter reduzieren.

Bei einer vorteilhaften Weiterbildung der erfindungsgemäßen Antriebsanordnung weist die Übertragungseinrichtung ein schaltbares Planetengetriebe oder alternativ ein kontinuierlich schaltbares Reibringgetriebe, zum Beispiel ein Reibringgetriebe mit zwei Kugeln oder mit zwei Doppelkegeln als Laufelementen, auf.

Ferner betrifft die vorliegende Erfindung ein mit Motorkraft und insbesondere zusätzlich mit Muskelkraft antreibbares Fahrzeug, ein Elektrofahrrad, eBike oder Pedelec.

Das erfindungsgemäße Fahrrad ist mit mindestens einem Rad und einer erfindungsgemäß ausgestalteten Antriebsanordnung ausgebildet, welche dem Antreiben des mindestens einen Rades dient.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines Fahrzeuges nach Art eines Elektrofahrrades, bei welchem eine erste Ausführungsform der Erfindung realisiert ist.
- Figuren 2 und 3: zeigen schematische Ansichten zweier Ausführungsformen der erfindungsgemäßen Antriebsanordnung mit Kurbeltrieb und mit elektrischem Antrieb mit Fokus auf die Anbindung des Koppelgetriebes und die Kopplung zur Verstellvorrichtung.
- Figuren 4 und 5: zeigen schematische Ansichten zweier Ausführungsformen der erfindungsgemäßen Antriebsanordnung mit Kurbeltrieb und mit elektrischem Antrieb mit Fokus auf die Ausgestaltung des Koppelgetriebes mit den Anbindungen gemäß den Figuren 2 und 3.
- Figuren 6 und 7: zeigen die Ausführungsformen der erfindungsgemäßen Antriebsanordnung gemäß den Figuren 4 und 5, bei welchen die Übertragungseinrichtung ein mehrstufiges Planetengetriebe aufweist und die Verstellvorrichtung über Schaltfinger und eine Schaltkulisse realisiert ist.
- Figuren 8 und 9: zeigen die Ausführungsform der erfindungsgemäßen Antriebsanordnung gemäß Figur 4, bei welcher die Übertragungseinrichtung ein Reibringgetriebe mit Kugeln bzw. mit Doppelzylindern aufweist.

### Bevorzugte Ausführungsformen der Erfindung

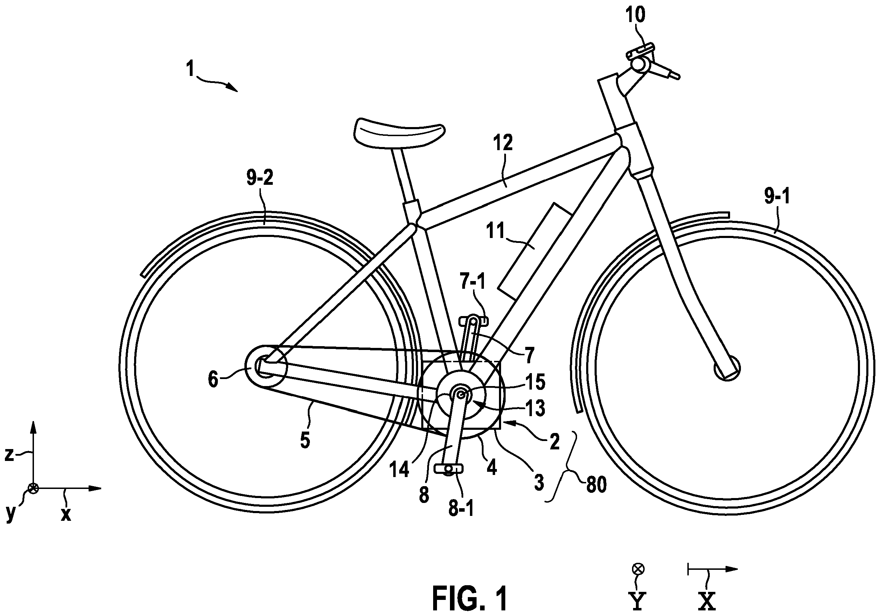

Nachfolgend werden unter Bezugnahme auf die Figuren 1 bis 9 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weitere Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die erfindungsgemäße Antriebsanordnung 80 des erfindungsgemäßen Fahrzeuges 1 aus Figur 1 weist den Kurbeltrieb 2 und den elektrischen Antrieb 3 auf, wobei die von diesen erzeugbaren Drehmomente über eine entsprechende und in Figur 1 nicht dargestellte Übertragungseinrichtung 20 aufnehmbar und an das Kettenblatt als Abtriebselement 4 übertragbar sind.

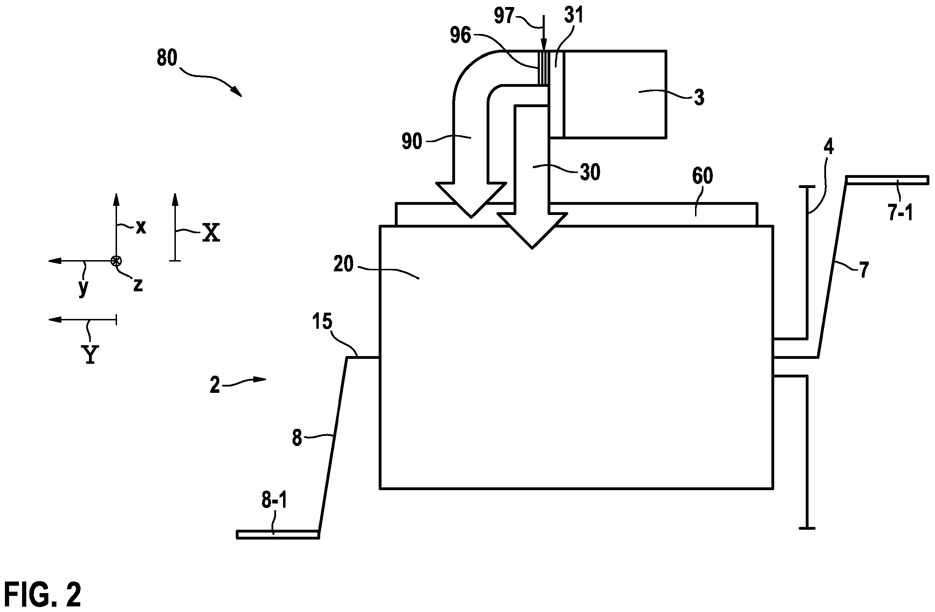

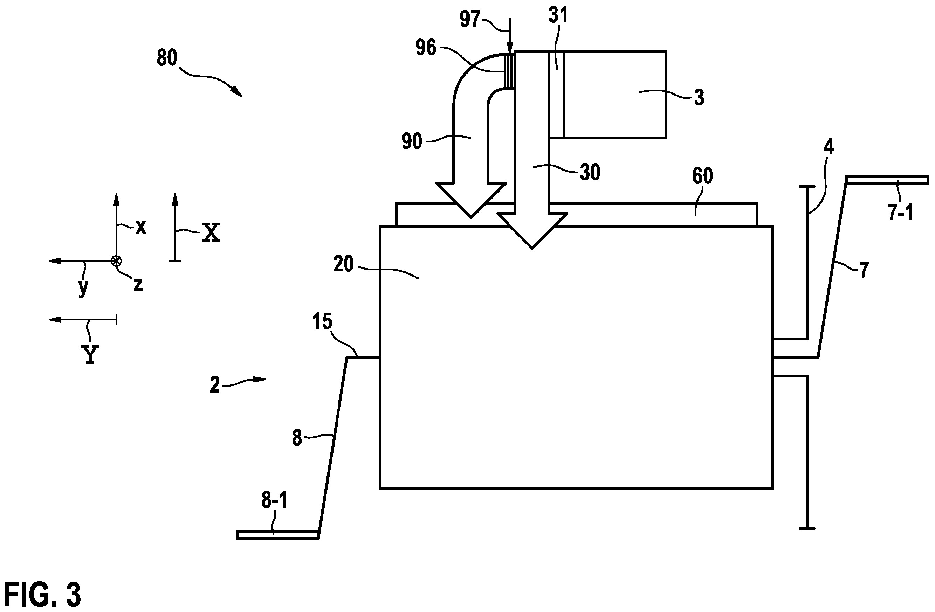

Die Figuren 2 und 3 zeigen in schematischer Weise zwei allgemeine Ausführungsformen der erfindungsgemäßen Antriebsanordnung 80.

Die Ausführungsform der Antriebsanordnung 80 gemäß der vorliegenden Erfindung aus den Figuren 2 und 3 weist einen Kurbeltrieb 2 zum Aufprägen eines mit Muskelkraft erzeugten Drehmoments auf die Kurbelwelle 15 sowie einen elektrischen Antrieb 3, insbesondere einen Elektromotor, zum Erzeugen eines Motordrehmoments auf.

Die erzeugten Drehmomente vom Kurbeltrieb 2 und vom elektrischen Antrieb 3 werden mittels einer Übertragungseinrichtung 20 aufgenommen und an ein Abtriebselement 4, zum Beispiel einem Kettenblatt oder dergleichen, übertragen, wobei im Zusammenhang mit der Übertragungseinrichtung 20 eine steuerbar variierbare Übersetzung, die in der Übertragungseinrichtung 20 mittels eines entsprechenden Getriebes realisiert wird, zum Tragen kommt.

Die Darstellung der Figuren 2 und 3 legt ihren Fokus primär auf die Möglichkeit der Anbindung des Koppelgetriebes 90 zur Kopplung des elektrischen Antriebes 3 mit der Verstellvorrichtung 60, welcher mit der Übertragungseinrichtung 20 gekoppelt ist und durch dessen Betätigung die Übersetzung der Übertragungseinrichtung 20 einstellbar ist.

Bei der Ausführungsform gemäß Figur 2 ist direkt oder indirekt an einer Antriebswelle 31 des elektrischen Antriebs 3 ein Motorreduziergetriebe 30 zum Einbringen des vom elektrischen Antrieb 3 erzeugten Motordrehmoments in die Übertragungseinrichtung 20 ausgebildet.

Unabhängig davon ist ein Koppelgetriebe 90 ausgebildet, welches ebenfalls zumindest einen Teil und/oder zumindest temporär und vorzugsweise in schaltbarer Art und Weise einen Teil des Motordrehmoments des elektrischen Antriebs 3 aufnimmt und in steuerbarer Weise an die Verstellvorrichtung 60 zum Bewirken einer Variation der Übersetzung der Übertragungseinrichtung 20 abgibt.

In der in Figur 2 dargestellten Ausführungsform ist das Koppelgetriebe 90 unter Zwischenschaltung einer Kupplung 96, die mit einem Aktuator 97 betätigbar ist, im Wesentlichen direkt mit der Antriebswelle 31 des elektrischen Antriebs 3 verbunden.

Bei der Ausführungsform gemäß Figur 3 greift dagegen die Kupplung 96 unter Steuerung durch den Aktuator 97 nicht direkt auf die Antriebswelle 31 des elektrischen Antriebs 3 zu, sondern über das zwischengeschaltete Reduziergetriebe 30 des elektrischen Antriebs 3.

In den Figuren 2 und 3 sind im Zusammenhang mit dem Kurbeltrieb 2 noch die Kurbeln 7 und 8 mit den Pedalen 7-1 und 8-1 dargestellt.

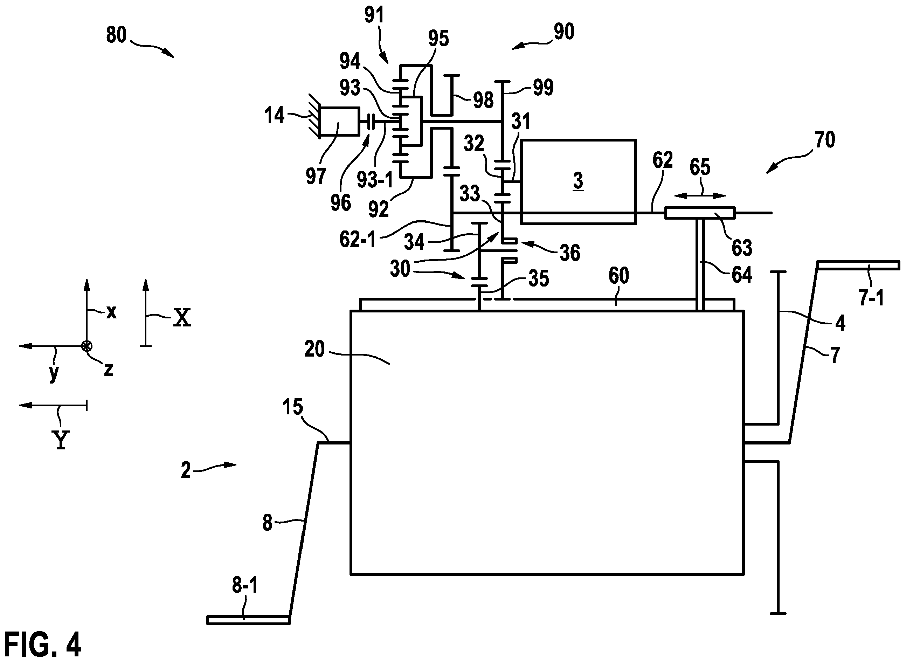

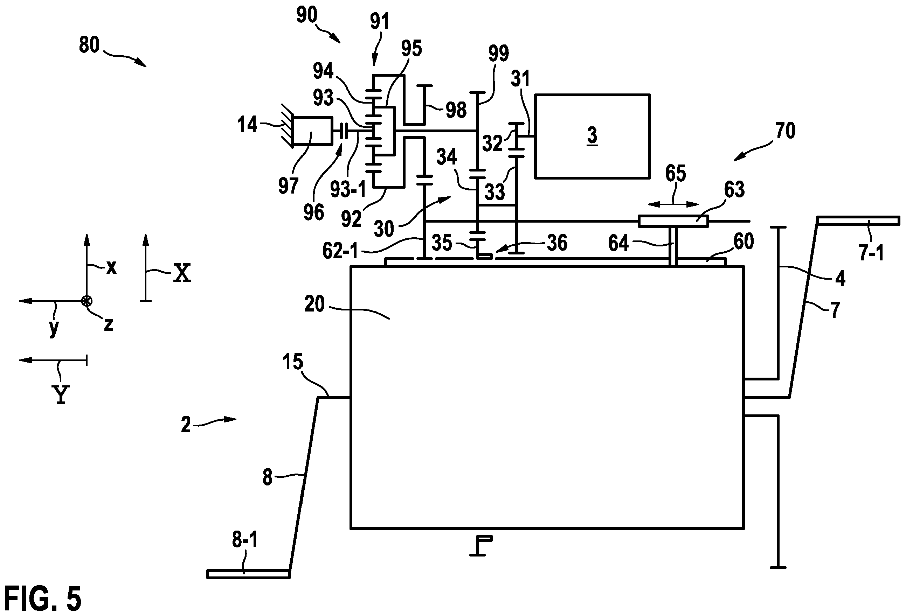

Die Figuren 4 und 5 zeigen in schematischer Weise Ansichten zweier allgemeiner Ausführungsformen der erfindungsgemäßen Antriebsanordnung 80 mit Kurbeltrieb 2 und mit elektrischem Antrieb 3, hier jedoch mit Fokus auf die konkrete Ausgestaltung des Koppelgetriebes 90 und der Übertragungsmechanismen vom Koppelgetriebe 90 auf die Verstellvorrichtung 60.

Die Ausführungsformen der Figuren 4 und 5 unterscheiden sich ausschließlich im Hinblick auf die Anbindung des Koppelgetriebes 90 in Bezug auf den elektrischen Antrieb 3.

Bei der Ausführungsform gemäß Figur 4 erfolgt die Übertragung zumindest eines Teils des Motordrehmoments des elektrischen Antriebs 3 unter mehr oder weniger direktem Abgriff an der Antriebswelle 31 des elektrischen Antriebs 3, nämlich im Zusammenhang mit einem ersten Stirnrad 32, welches direkt drehfest mit der Antriebswelle 31 des elektrischen Antriebs 3 verbunden ist.

Bei der Ausführungsform gemäß Figur 5 erfolgt dagegen der Abgriff des Motordrehmoments des elektrischen Antriebs 3 durch das Koppelgetriebe 90 nur mittelbar, nämlich mittels einer Stirnradstufe 99 des Koppelgetriebes 90 über eine nachfolgende Stirnradstufe 34 und vorgeschaltete Stirnräder 32, 33 des Motorreduziergetriebes 30.

Das Koppelgetriebe 90 bei den Ausführungsformen der Antriebsanordnung 80 der Figuren 4 und 5 besteht jeweils aus einem Planetengetriebe 91.

Das Planetengetriebe 91 weist ein zentral gelagertes Sonnenrad 93, einen Planetenträger oder Planetensteg 95 mit Planeten 94 sowie ein gemeinsames und innen verzahntes Hohlrad 92 auf.

Der Planetenträger 95 ist drehfest mit der oben beschriebenen Stirnradstufe 99 verbunden und realisiert den Eintrag des Anteils des Motordrehmoments aus dem elektrischen Antrieb 3, entweder in direkter Weise gemäß Figur 4, das heißt, direkt über die Motorwelle 31 oder das drehfest mit der Motorwelle 31 verbundene Stirnrad 32 des Motorreduziergetriebes 30, oder in indirekter Weise gemäß Figur 5 über das nachgeschaltete Stirnrad 34 des Motorreduziergetriebes 30.

Das Sonnenrad 93 des Planetengetriebes 91 ist mit einer Kupplung 96, zum Beispiel einer schaltbaren Reibkupplung, verbunden. Die Kupplung 96 ist über einen Aktuator 97 betätigbar und kann mindestens zwei Zustände, nämlich einen entkoppelten und einen gekoppelten Zustand realisieren. Im entkoppelten Zustand ist das Sonnenrad 93 frei rotierbar und läuft bei Eintrag des Anteils des Motordrehmomentes über das Stirnrad 99 frei mit, so dass insgesamt durch das Planetengetriebe 91 als Koppelgetriebe 90 kein Motordrehmoment übertragen wird.

Im gekoppelten Zustand der Kupplung 96 ist jedoch das Sonnenrad 93 des Planetengetriebes 91 gegenüber dem Rest des Planetengetriebes 91 und insbesondere mit dem Gehäuse 14, welches zum Beispiel das Tretlagergehäuse oder Kurbellagergehäuse sein kann, drehfest verbunden. Das bedeutet, dass beim Eintrag des Motordrehmoments aus dem elektrischen Antrieb 3 über das Stirnrad 99 sich das Sonnenrad 93 des Planetengetriebes 91 nicht frei drehen kann, wenn der Planetenträger 95 mit dem Planeten 94 das Sonnenrad 93 umläuft. Aus diesem Grund wird bei Rotation des Planetenträgers 95 mit den Planeten 94 über den Antrieb mittels des Stirnrads 99 das vom Planetengetriebe 91 aufgenommene Motordrehmoment zunächst an das gemeinsame innenverzahnte Hohlrad 92 und damit an das mit dem Hohlrad 92 drehfest verbundene Stirnrad 98 übertragen.

Bei den Ausführungsformen gemäß den Figuren 4 und 5 ist das mit dem Hohlrad 92 drehfest verbundene Stirnrad 98 des Planetengetriebes 91 mit einer Stirnradstufe 62-1 einer Spindel 62 gekoppelt. Die Spindel 62 und die Stirnradstufe 62-1 der Spindel 62 sind miteinander drehfest verbunden, so dass durch das Kämmen der Stirnradstufen 98 und 62-1 eine Drehung der Spindel 62 entsteht. Die Spindel 62 umfassend ist eine Spindelmutter 63 ausgebildet. Durch die Rotation der Spindel 62 und das Kämmen der Gewinde Spindel 62 und Spindelmutter 63 erfolgt eine Verschiebung der Spindelmutter 63 entlang der Richtung 65 Spindelachse.

In der Darstellung der Figuren 4 und 5 liegt die Spindelachse parallel zur y-Richtung oder Quererstreckungsrichtung Y des zu Grunde liegenden Fahrzeugs 1.

An der Spindelmutter 63 ist ein Verbindungselement 64 angebracht, welches mit einem bestimmten Mechanismus in der Verstellvorrichtung 60 verbunden ist und bei Bewegung durch Bewegung der Spindelmutter 63 entlang der Spindel 62 eine Veränderung der Übersetzung der Übertragungseinrichtung 20 bewirkt, insbesondere also einen Schaltvorgang.

In der Figur 4 ist im Zusammenhang mit dem Motorreduziergetriebe 30, welches Stirnräder 32, 33, 34 und 35 aufweist, noch ein Motorfreilauf 36 dargestellt.

Das ausgangsseitige Stirnrad 35 des Motorreduziergetriebes 30 ist mit der eigentlichen Übertragungseinrichtung 20 gekoppelt und dient letztlich dem Eintrag des Motordrehmoments des elektrischen Antriebs 3 in das Schaltgetriebe 50, welches in der Übertragungseinrichtung 20 enthalten ist.

Bei der Darstellung der Ausführungsform gemäß Figur 5 ist das Motorreduziergetriebe 30 abgewandelt ausgebildet. Dort liegt der Freilauf 36 nicht im Übergang zwischen den Stirnrädern 33 und 34 vor, sondern im Übergang vom Stirnrad 35 des Motorreduziergetriebes 30 zur Übertragungseinrichtung 20.

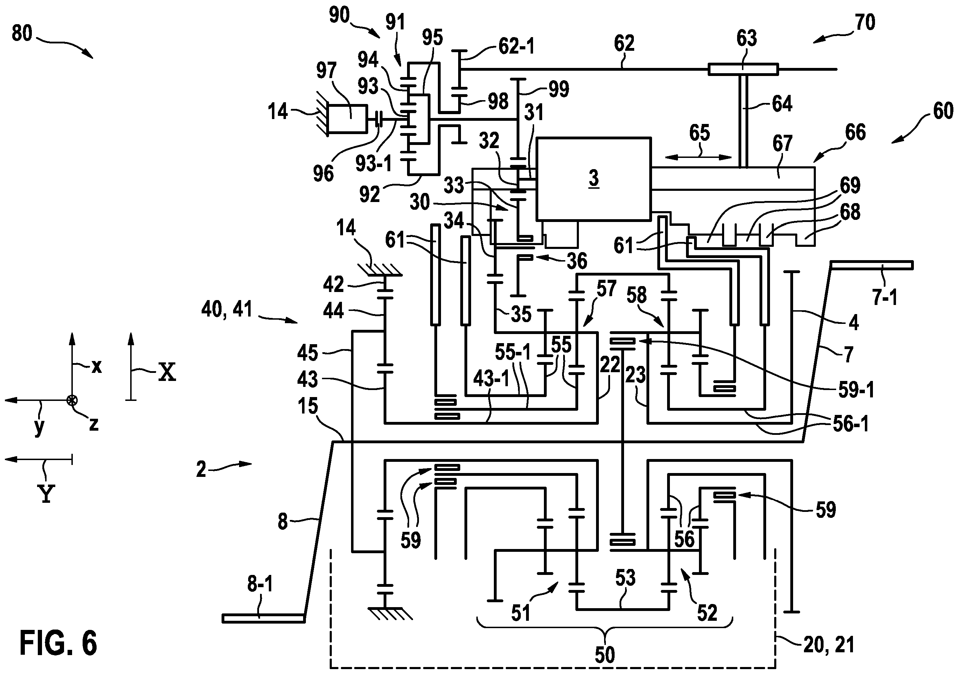

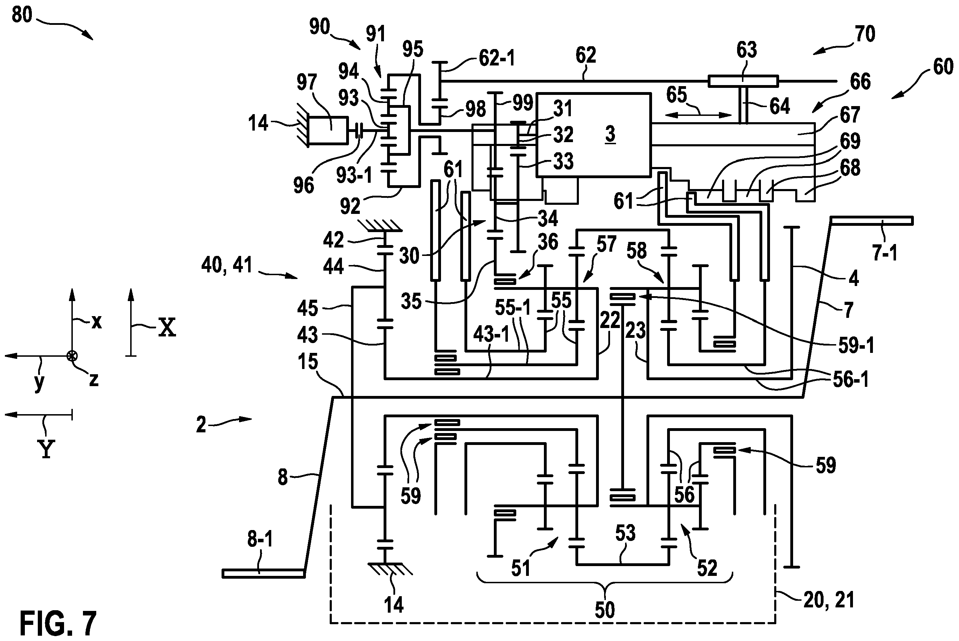

Die Figuren 6 und 7 zeigen Weiterbildungen der Ausführungsformen der erfindungsgemäßen Antriebsanordnung 80 gemäß den Figuren 4 und 5, jedoch mit Konkretisierungen im Hinblick auf die eigentliche Verstellvorrichtung 60 und die Ausgestaltung der Übertragungseinrichtung 20.

Das Koppelgetriebe 90 der Figur 6 entspricht dem Koppelgetriebe 90 der Figur 4.

Das Koppelgetriebe 90 der Figur 7 korrespondiert direkt mit dem Koppelgetriebe 90 der Figur 5.

Der Übertragungsmechanismus 70 mit Spindel 62, Stirnradstufe 62-1, Spindelmutter 63 und Verbindungselement 64 aus den Figuren 6 und 7 entspricht dem Übertragungsmechanismus 70 aus den Figuren 4 bzw. 5.

Die Übertragungseinrichtung 20 in den Figuren 6 und 7 wird im Wesentlichen von einem mehrstufigen Planetengetriebe 21 gebildet. Die konkrete Ausgestaltungsform der Übertragungseinrichtung 20 auf der Grundlage des mehrstufigen Planetengetriebes 21 wird nachfolgend im Detail erläutert.

Figur 6 ist also eine schematische Draufsicht auf eine Ausführungsform der erfindungsgemäßen Antriebsordnung 80 mit einem elektrischen Antrieb 3 und einem Kurbeltrieb 2.

Zur Übertragung von Drehmomenten vom Kurbeltrieb 2 und vom elektrischen Antrieb 3 ist eine Übertragungseinrichtung 20 ausgebildet, welche ein mit einem koaxial zu der durch die Kurbelwelle 15 definierten Drehachse Y angeordnetes Planetengetriebe 21 aufweist.

Das Planetengetriebe 21 besteht aus einer Hochtreiberstufe 40 mit einem Planetengetriebe 41 der Hochtreiberstufe 40 einerseits und einem mehrstufigen Schaltgetriebe 50 mit einem ersten und hier zweistufigen Planetengetriebe 51, nämlich eingangsseitig, der Hochtreiberstufe 40 zugewandt und vom Abtriebselement 4 abgewandt, und einem zweiten und hier zweistufigen Planetengetriebe 52, nämlich ausgangsseitig, dem Abtriebselement 4 zugewandt und der Hochtreiberstufe 40 abgewandt.

Die ersten und zweiten Planetengetriebe 51 und 52 des Schaltgetriebes 50 weisen entsprechende erste und zweite Sonnenräder 55 bzw. 56 und den Sonnenrädern 55, 56 zugeordnete Planetenräder 57 bzw. 58 auf, die an Planetenstegen 22, 23 gelagert und über ein gemeinsames Hohlrad 53 gekoppelt sind.

Über lösbare Verbindungen wird die Verbindung der Sonnenräder 55, 56 mit dem Gehäuse 14 der Antriebsordnung 80 in gesteuerter Art und Weise bewirkt. Dies geschieht bei der Ausführungsformen gemäß den Figuren 6 und 7 über das gesteuert schaltbare Sperren oder Freigeben der mit den Sonnenrädern 55, 56 drehfest verbundenen und umlaufenden Mitnehmerelemente an den distalen Enden der Schaltfinger 61 mit den Anschlagselementen 68 am Kulissenkörper 67 der Schaltkulisse 66, die im Zusammenhang mit der Verstelleinheit 60, die auch als Verstellvorrichtung 60 bezeichnet werden kann, von der Drehachse Y beabstandet aber achsenparallel zu dieser in der Pfeilrichtung 65 verschiebbar ist.

Jedes der Sonnenräder 55 des ersten Planetengetriebes 51 und jedes der Sonnenräder 56 des zweiten Planetengetriebes 52 des Schaltgetriebes 50 weist einen eigenen und mit dem jeweiligen Sonnenrad 55, 56 drehfest gekoppelten Schaltfinger 61 auf. Die Mitnehmerelemente, die auch als Klauen oder als Mitnehmerklauen bezeichnet werden können und sich am jeweiligen distalen Ende der Schaltfinger 61 befinden, sind in Bezug auf die Lücken 69 und die Anschlagselemente 68, die auch als Widerlagerelemente oder Kulissenklauen bezeichnet werden können, so abgestimmt angeordnet, dass durch Verschieben der Schaltkulisse 66 entlang der Pfeilrichtung 65 ein getrenntes oder kombiniertes Freigeben oder Sperren der einzelnen Sonnenräder 55 und 56 der ersten und zweiten Planetengetriebe 51, 52 der Getriebeschaltstufen 50 des Schaltgetriebes erreicht werden kann.

Ferner ist an verschiedenen Stellen des Schaltgetriebes 50 jeweils ein Freilauf oder Getriebefreilauf 59 bzw. 59-1 ausgebildet, wobei der Freilauf 59-1 im Zusammenhang mit einem Direktgang steht.

Die Hochtreiberstufe 40 mit dem Planetengetriebe 41 zum Einbringen des mit Muskelkraft erzeugten Drehmomentes weist ein Hohlrad 42, ein innenlaufendes Sonnenrad 43 sowie einen dazwischen laufenden Planetensteg 45 mit Planeten 44 der Hochtreiberstufe 40 auf.

Andererseits wird das vom elektrischen Antrieb 3 erzeugte Motordrehmoment durch die Motorwelle 31 an das Motorreduziergetriebe 30 abgegeben und letztlich an ein Stirnrad 35 als Abtriebselement des Motorreduziergetriebes 30 übertragen, welches materiell verbunden ist mit dem eingangsseitigen Planetensteg 22 des Schaltgetriebes 50.

In dem in Figur 6 dargestellten Fall besteht das Motorreduziergetriebe 30 wieder aus einer Anordnung mehrerer Stirnräder 32 bis 34, die das Motordrehmoment abtriebsseitig auf das mit dem eingangsseitigen Planetensteg 22 gekoppelte Stirnrad 35 übertragen.

Die mit dem Planetengetriebe 21 der Übertragungseinrichtung 20 im Zusammenhang stehenden Aspekte der Ausführungsform gemäß Figur 7 sind identisch mit denjenigen der Ausführungsform gemäß Figur 6 und werden nicht wiederholt.

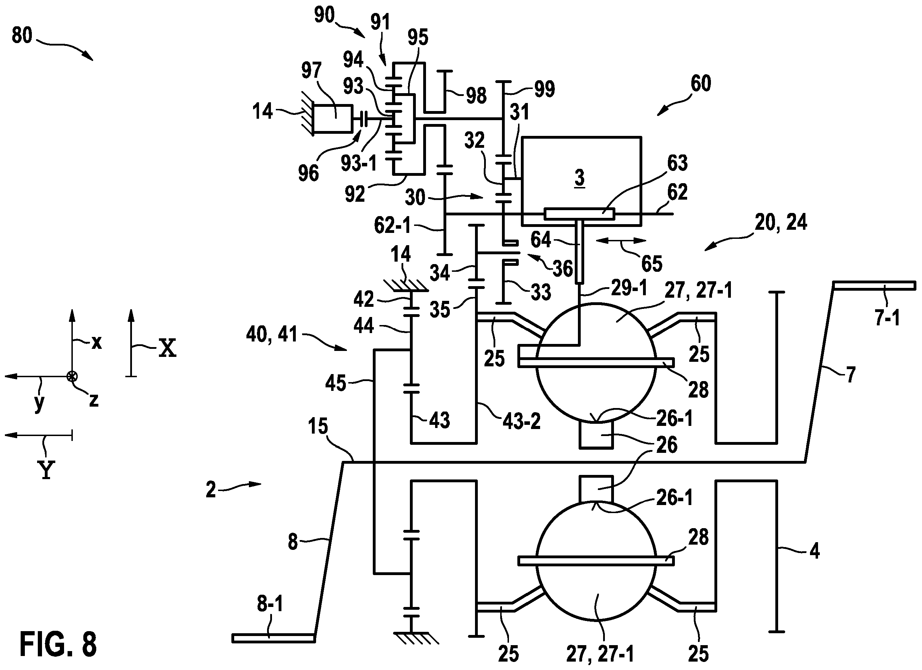

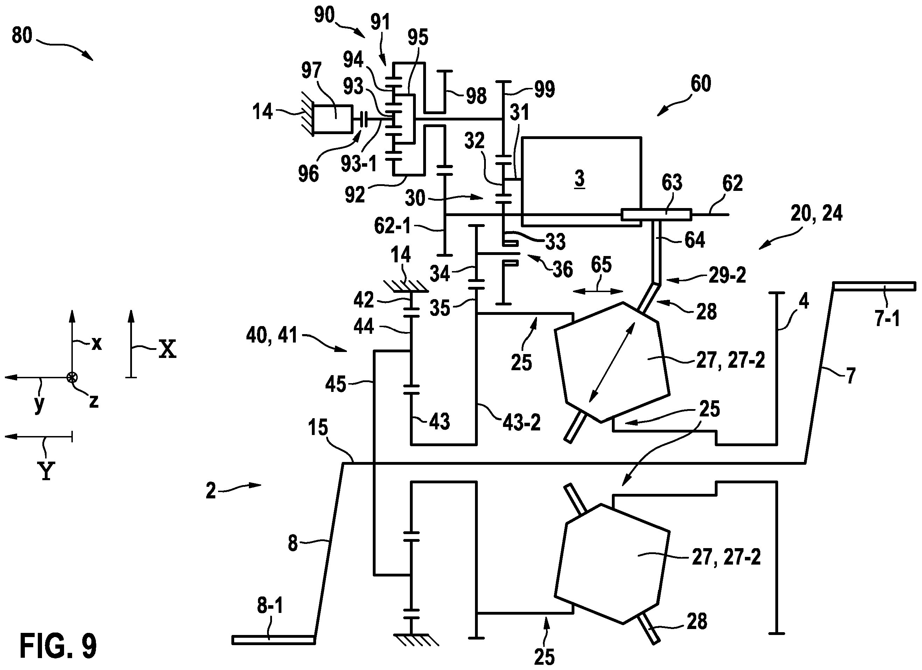

Die Figuren 8 und 9 zeigen schematisch Ausführungsformen der erfindungsgemäßen Antriebsanordnung 80 auf der Grundlage der Ausführungsform gemäß Figur 4, bei welcher die jeweilige Übertragungseinrichtung 20 auf der Grundlage eines jeweiligen Reibringgetriebes 24 mit Kugeln 27-1 bzw. mit Doppelkegeln 27-2 als Laufelemente 27 ausgebildet ist.

Über einen Kippmechanismus 29-1 bzw. über einen Verschiebemechanismus 29-2 wird eine jeweilige Drehachse 28 der Laufelemente 27 in Kopplung mit dem Verbindungselement 64 der Verstellvorrichtung 60 über eine Verschiebung derselben entlang der Verschiebungsrichtung 65 entlang der Spindel 62 mit einer Neigung verstellt, so dass unterschiedliche Radien der Laufelemente 27 mit den Laufringen 25 wechselwirken, um die Variation der Übersetzung der Übertragungseinrichtung 20 zu bewirken.

Diese und weitere Merkmale und Eigenschaften der vorliegenden Erfindung werden an Hand der folgenden Darlegungen weiter erläutert:
Die Erfindung betrifft auch Elektrofahrräder und insbesondere Pedelec oder eBikes als erfindungsgemäße Fahrzeuge 1 mit Mittelmotor und einer Fahrradschaltung zur Anpassung der begrenzten Antriebskraft des Fahrers an die unterschiedlichen Fahrwiderstände.

Bekannt ist bei Elektrofahrrädern mit Tretlagerantrieb die Anordnung einer Ketten- oder Nabenschaltung am Hinterrad und eines elektrischen Antriebs am Tretlager.

Bekannt sind auch Fahrradschaltungen, insbesondere in der Kombination mit einem Pedelec- oder e-Bike-Tretlagerantrieb mit elektromechanisch aktuierter automatischer Gangwahl.

Für die Aktuierung werden zusätzliche Elektromotoren eingesetzt.

Damit weisen diese Antriebssysteme für Elektrofahrräder, Pedelec, eBikes neben dem Elektromotor als elektrischem Antrieb 3 zur Unterstützung des Fahrers herkömmlicherweise mindestens einen weiteren Elektromotor mit Getriebe für die automatische Gangwahl auf.

Die Dimensionierung dieser zusätzlichen Motoren mit Getriebe richtet sich nach der Höhe der Last, bei der geschaltet werden soll.

Die Erfindung hat die Aufgabe - insbesondere in einem Pedelec/eBike-Tretlagerantrieb mit integriertem Schaltgetriebe - eine elektromechanisch aktuierte automatische Gangwahl ohne einen zusätzlichen Elektromotor und/oder mit einer sehr kompakten Verstellvorrichtung 60, z.B. einen Stellantrieb mit Motor mit Getriebe, zu schaffen, welcher z.B. lediglich als Aktor für eine Kupplung dient.

Damit soll ein besonders kompakter, gewichts- und geräuschreduzierter Antrieb - insbesondere für ein Pedelec oder eBike - geschaffen werden.

Die Erfindung löst die gestellte Aufgabe durch Verwendung des bereits für den Antrieb vorhandenen Elektromotors 3 des Tretlagerantriebs als Antriebsanordnung 80, welcher der Unterstützung des Fahrers dient, als Verstellmotor für die automatische Aktuierung eines Schaltvorgangs.

Damit ist es erfindungsgemäß möglich, auf einen zusätzlichen Elektromotor als Aktor zur Verstellung der Gänge zu verzichten oder eine besonders kompakte Verstellvorrichtung 60 und insbesondere Stellantrieb mit oder aus Motor mit Getriebe mit geringer Leistung als Aktor 97 für eine Kupplung 96 zu verwenden. Der Wegfall eines zusätzlichen Elektromotors oder die Verwendung einen besonders kompakten und leichten Stellantriebs führt zu einer besonders kompakten, gewichts- und geräuschreduzierten Auslegung der erfindungsgemäßen Antriebsanordnung 80.

Die Verwendung des Elektromotors 3 zur Unterstützung des Fahrers als Verstellmotor erfolgt durch eine Anbindung des Elektromotors 3 an die Schaltmechanik über ein zuschaltbares Koppelgetriebe 90.

Das zuschaltbare Koppelgetriebe 90 stellt für die Dauer eines Schaltvorgangs die Verbindung zwischen Motor 3 und Schaltmechanik 60 her und passt die Drehzahl und das Drehmoment des Motors 3 an die erforderliche Dynamik und zu überwindende Lasten der Schaltmechanik 60 an.

Bevorzugt für eine besonders kompakte Darstellung kann das zuschaltbare Koppelgetriebe 90 ein bereits vorhandenes Motorreduziergetriebe 30 teilweise mitbenutzen.

Das Zuschalten dieses Koppelgetriebes 90 geschieht über eine Kupplung 96. Die Kupplung 96 kann bevorzugt mit einem Planetengetriebe 91 des zuschaltbaren Koppelgetriebes 90 verbunden sein, so dass das Zuschalten des Koppelgetriebes 90 durch Festhalten des Sonnenrads 93 drehfest am Gehäuse 14 erfolgt. Damit ist gegeben, dass die Kupplung 96 bzw. der Aktor 97 für die Kupplung 96 sowie Ansteuerung und Elektronik nicht mit dem zuschaltbaren Koppelgetriebe 90 mitrotieren müssen. Der Aktor 97 für eine Kupplung 96 bzw. die Kupplung 96 können beispielsweise ein Hubmagnet, ein schaltbarer Freilauf oder ein Elektromotor/Stellantrieb sein.

Figur 4 zeigt in einer beispielhaften Ausführung den Aufbau einer erfindungsgemäßen Antriebsanordnung 80 als Pedelec/eBike-Tretlagerantrieb mit integriertem Schaltgetriebe 50 in koaxialer Anordnung zur Kurbelwelle 15 und Kettenblatt als Abtriebselement 4 und mit Verwendung des Elektromotors 3 zur Unterstützung des Fahrers als Verstellmotor für die Verstellvorrichtung 60 oder den Stellantrieb 60.

Auf Grund des Motorfreilaufs 36 als Überholfreilauf auf der Zwischenwelle des Motorreduziergetriebes 30 zwischen den Stirnrädern 33 und 34 erfolgt die Anbindung des Elektromotors 3 an die Schaltmechanik 60 über ein zuschaltbares Getriebe am Ritzel 32 des Motorreduziergetriebes 30 auf der Motorwelle 31. Der Überholfreilauf 36 verhindert die Mitnahme bzw. ein erzwungenes Drehen des Motors 3 bei Stillstand des Motors 3 und damit auch eine Drehrichtungsumkehr des Motors 3. Eine Drehrichtungsumkehr des Motors 3 ist aber für eine Umkehr der Schaltrichtung von Hoch- zum Herunterschalten oder umgekehrt erforderlich.

In Figur 5 ist eine alternative Anordnung des Getriebes bei alternativer Anordnung des Überholfreilaufs 36 dargestellt.

Das zuschaltbare Koppelgetriebe 90 für die Verbindung zwischen Motor 3 und Schaltmechanik 60 besteht aus einem mehrstufigem Getriebe mit u.a. einer Spindel 62 und Spindelmutter 63 zur Anpassung der Drehzahl und des Drehmoments des Motors 3 an die erforderliche Dynamik und zu überwindende Lasten der Schaltmechanik (Figuren 4 und 5).

Ein Planetengetriebe 91 des zuschaltbaren Koppelgetriebes 90 ist so angeordnet, dass allein über das drehfeste Festhalten oder Freigeben des Sonnenrads 93 gegenüber Gehäuse 14 das Koppelgetriebe 90 mittels einer Kupplung 96 zugeschaltet und wieder gelöst werden kann. Der dargestellte Aktor 97 für eine Kupplung 96 bzw. die Kupplung 96 können beispielsweise ein Hubmagnet, ein schaltbarer Freilauf oder ein Elektromotor/Stellantrieb sein.

Die Figuren 6 und 7 zeigen ein bevorzugtes Ausführungsbeispiel mit einem integrierten lastschaltfähigen 7-Gang-Planetenschaltgetriebe 50 in koaxialer Anordnung zur Kurbelwelle 15 und Kettenblatt 4.

Die Spindelmutter 63 bewegt hier eine Schaltkulisse 66 parallel in der Richtung 65 zur Tretkurbelwelle 15, mit der die verschiedenen Gänge des Planetenschaltgetriebes 50 durch Blockieren von mit den Sonnenrädern 55, 56 des Planetenschaltgetriebes 50 drehfest verbundenen Schaltfingern 61 geschaltet werden.

Zu bemerken ist noch, dass bei den Ausführungsformen der Figuren 6 und 7 das Sonnenrad 43 der Hochtreiberstufe 40 mit einer Hohlwelle 43-1 und die Sonnenräder 55, 56 der ersten und zweiten Planetengetriebe 51 bzw. 52 jeweils mit einer Hohlwelle 55-1 bzw. 56-1 ausgebildet sind.

Ein weiteres Ausführungsbeispiel mit integriertem schaltbaren Kugel-ReibringGetriebe 24 in koaxialer Anordnung zur Kurbelwelle 15 und Kettenblatt 4 zeigt Figur 8. Dabei handelt es sich um ein stufenlos schaltbares Getriebe mit mehreren auf den Umfang verteilten Kugeln 27-1 als Lauf- und Kraftübertragungselemente 27. Die Kugeln 27-1 sind ortsfest bzw. laufen nicht um und drehen sich durch anliegende rotierende Reibringe 25 um die eigene Achse 28 (Figur 8). Eine Änderung der Übersetzung des Schaltgetriebes 24 erfolgt durch Verstellen der Neigung der Drehachsen 28 der Kugeln 27-1 über den Kippmechanismus 29.

Bei der Ausführungsform mit Reibringgetriebe 24 gemäß Figur 8 laufen die Kugeln 27-1 als Laufelemente 27 auf einer Lauffläche 26-1 eines zentralen Laufrings 26 und wechselwirken des Weiteren mit den Reibringen 25.

Ein weiteres Ausführungsbeispiel mit integriertem stufenlos schaltbaren Getriebe in koaxialer Anordnung zur Kurbelwelle 15 und Kettenblatt 4 stellt das Reibringgetriebe 24 nach Art eines Doppelkegel-Reibring-Getriebes gemäß Figur 9 dar. Lauf- und Kraftübertragungselemente 27 sind hier Doppelkegel 27-2, welche sich durch anliegende rotierende Reibringe 25 um die eigene Achse 28 drehen und dabei entlang dieser Drehachse 28 verschiebbar sind. Durch eine translatorische Bewegung der Doppelkegel-Drehachsen 28 parallel zur Tretkurbelwelle 15 kann die Übersetzung des Schaltgetriebes 24 variiert werden.

Bei den Ausführungsformen mit Reibringgetriebe 24 gemäß den Figuren 8 und 9 weist die Hohlwelle 43-1 der Hochtreiberstufe 40 eine Stirnradstufe 43-2 auf, die mit der Stirnradstufe 35 des Motorreduziergetriebes 30 zusammenfällt.

Nachfolgend werden nochmals Kernaspekte der Ausführungsformen der Figuren zusammengefasst
- Figur 4:: Aufbau eines Pedelec/eBike-Tretlagerantriebs 80 mit integriertem Schaltgetriebe 50 und Verwendung des Elektromotors 3 zur Unterstützung des Fahrers als Verstellmotor.
- Figur 5:: Aufbau eines Pedelec/eBike-Tretlagerantriebs 80 mit integriertem Schaltgetriebe 50 und Verwendung des Elektromotors 3 zur Unterstützung des Fahrers als Verstellmotor mit alternativer Anbindung an das Motorreduziergetriebe 30.
- Figur 6:: Ausführungsbeispiel mit integriertem lastschaltfähigem 7-Gang-Planetenschaltgetriebe 21 in koaxialer Anordnung zur Kurbelwelle und Kettenblatt.
- Figur 7:: Ausführungsbeispiel mit integriertem lastschaltfähigem 7-Gang-Planetenschaltgetriebe 21 in koaxialer Anordnung zur Kurbelwelle und Kettenblatt und alternativer Anbindung an das Motorreduziergetriebe 30.
- Figur 8:: Ausführungsbeispiel mit integriertem schaltbaren Kugel-Reibring-Getriebe 24 in koaxialer Anordnung zur Kurbelwelle 15 und Kettenblatt 4.
- Figur 9:: Ausführungsbeispiel mit integriertem schaltbaren Doppelkegel-Reibring-Getriebe 24 in koaxialer Anordnung zur Kurbelwelle 15 und Kettenblatt 4.

Im Hinblick auf die Ausgestaltungsformen gemäß den Figuren 4 bis 9 ist im Zusammenhang mit dem Koppelgetriebe 90 noch zu bemerken, dass das Sonnenrads 93 des Koppelgetriebe 90 eine Welle 93-1 aufweist, über welche die Verbindung zur Kupplung 96, die über den Aktuator 97 betätigbar ist, besteht.

## Patentansprüche

1. Antriebsanordnung (80) für ein mit Motorkraft und insbesondere zusätzlich mit Muskelkraft antreibbares Fahrzeug (1), ein Elektrofahrrad, eBike oder Pedelec,
mit:
- einem elektrischen Antrieb (3) zum Erzeugen eines Motordrehmoments,
- einer um eine Drehachse (Y) drehbaren Kurbelwelle (15) zum Aufnehmen zumindest des Motordrehmomentes,
- einer Übertragungseinrichtung (20), welche zum Übertragen eines von der Kurbelwelle (15) aufgenommenen Drehmomentes an ein mit einem Antriebsrad (9-2) des Fahrzeuges (1) koppelbares Abtriebselement (4) und zu einer schaltbar variablen Übersetzung ausgebildet ist, und
- einer Verstellvorrichtung (60), welche mit der Übertragungseinrichtung (20) gekoppelt ist und durch deren Betätigung die Übersetzung der Übertragungseinrichtung (20) einstellbar ist,
bei welcher der elektrische Antrieb (3) zur Betätigung der Verstellvorrichtung (60) ausgebildet und insbesondere zur Übertragung zumindest eines Teils des Motordrehmoments mit der Verstellvorrichtung (60) koppelbar ist
**dadurch gekennzeichnet, dass**
zur Kopplung des elektrischen Antriebs (3) mit der Verstellvorrichtung (60) ein zuschaltbares Koppelgetriebe (90) ausgebildet ist,
wobei das Koppelgetriebe (90) ein Planetengetriebe (91) aufweist,
wobei das Planetengetriebe (91) des Koppelgetriebes (90) einen Planetenträger (95) mit Planeten (94) aufweist, welcher in Bezug auf das Koppelgetriebe (90) eingangsseitig mit dem elektrischen Antrieb (3) direkt oder indirekt koppelbar oder gekoppelt ist.

2. Antriebsanordnung (80) nach Anspruch 1, bei welcher:
- der elektrische Antrieb (3) eine Motorwelle (31) aufweist und
- das Koppelgetriebe (90)
- direkt an die Motorwelle (31) und/oder
- indirekt über ein an die Motorwelle (31) gekoppeltes oder koppelbares Motorreduziergetriebe (30) und insbesondere über eine Stirnradstufe (34) davon gekoppelt oder koppelbar ist, insbesondere über eine in Bezug auf das Koppelgetriebe (90) eingangsseitige Stirnradstufe (99).

3. Antriebsanordnung (80) nach einem der Ansprüche 1 oder2,
bei welcher das Planetengetriebe (91) des Koppelgetriebes (90) ein gemeinsames Hohlrad (92) zum Innenumlauf für die Planeten (94) aufweist, welches insbesondere in Bezug auf das Koppelgetriebe (90) ausgangsseitig direkt oder indirekt mit der Verstellvorrichtung (60) koppelbar oder gekoppelt ist, vorzugsweise nach Art stirnradbildenden Außenverzahnung am Hohlrad (92) und/oder über eine mit dem Hohlrad (92) drehfest verbundene Stirnradstufe (98).

4. Antriebsanordnung (80) nach einem der vorangehenden Ansprüche,
bei welcher zur Kopplung der Verstellvorrichtung (60) an den elektrischen Antrieb (3) und insbesondere zur Kopplung an das Koppelgetriebe (90) ein Koppelmechanismus mit rotierbarer Spindel (62), die Spindel (62) umschließender und mit Rotation der Spindel (62) auf der Spindel (62) verschieblicher Spindelmutter (63) und insbesondere mit an der Spindelmutter (63) angebrachtem Verbindungselement (64) zur Verbindung mit der Verstellvorrichtung (60) ausgebildet ist.

5. Antriebsanordnung (80) nach Anspruch 4,
bei welcher die Spindel (62) eingangsseitig eine Stirnradstufe (62-1) aufweist, insbesondere zur Kopplung mit der Ausgangsseite des Koppelgetriebes (90), vorzugsweise mit der ausgangsseitigen Stirnradstufe (98) des Hohlrades (92) des Planetengetriebes (91) des Koppelgetriebes (90).

6. Antriebsanordnung (80) nach einem der Ansprüche 2 bis 5,
- bei welcher für die Schaltbarkeit der Kopplung des elektrischen Antriebs (3) an die Verstellvorrichtung (60) eine - insbesondere über einen Aktuator (97) - steuerbar schaltbare Kupplung (96) ausgebildet ist,
- welche insbesondere
- zwischen dem Sonnenrad (93) des Planetengetriebes (91) des Koppelgetriebes (90) und einem drehfesten Bereich der Antriebsanordnung (80), insbesondere einem Gehäuse (14), angeordnet ist,
- gesteuert mindestens einen gekoppelten und einen entkoppelten Zustand einnehmen kann,
- wobei im gekoppelten Zustand das Sonnenrad (93) des Planetengetriebes (91) zur Übertragung zumindest eines Teils des Motordrehmoments drehfest gehaltert ist und
- wobei im entkoppelten Zustand das Sonnenrad (93) des Planetengetriebes (91) ohne Übertragung von Motordrehmoment frei rotierbar ist.

7. Antriebsanordnung (80) nach einem der vorangehenden Ansprüche, welche als Mittelmotorantrieb und insbesondere mit einem Gehäuse (14) ausgebildet ist, in welchem die Übertragungseinrichtung (20), die Verstellvorrichtung, der elektrische Antrieb (3), das Motorreduziergetriebe (30) und zumindest ein Teil Kurbelwelle (15) aufgenommen sind.

8. Antriebsanordnung (80) nach einem der vorangehenden Ansprüche, bei welcher die Übertragungseinrichtung (20) ein schaltbares Planetengetriebe (21) oder ein kontinuierlich schaltbares Reibringgetriebe (24) aufweist.

9. Mit Motorkraft und insbesondere zusätzlich Muskelkraft antreibbares Fahrzeug (1), Elektrofahrrad, eBike oder Pedelec,
mit:
- mindestens einem Rad (9-1, 9-2) und
- einer Antriebsanordnung (80) nach einem der Ansprüche 1 bis 8 zum Antreiben des mindestens einen Rades (9-1, 9-2).

## Claims

1. Drive arrangement (80) for a vehicle (1) which can be driven by motor power and in particular additionally by muscle power, an electric bicycle, eBike or pedelec,
having:
- an electric drive (3) for generating a motor torque,
- a crankshaft (15), which is rotatable about an axis of rotation (Y), for receiving at least the motor torque,
- a transmission device (20) which is designed for transmitting a torque received by the crankshaft (15) to an output element (4) which is couplable to a drive wheel (9-2) of the vehicle (1) and for realizing a switchably variable transmission ratio, and
- an adjustment apparatus (60) which is coupled to the transmission device (20) and by the actuation of which the transmission ratio of the transmission device (20) is adjustable,
in which the electric drive (3) is designed for actuating the adjustment apparatus (60) and, in particular, is couplable to the adjustment apparatus (60) for the purposes of transmitting at least a part of the motor torque,
**characterized in that**
an activatable coupling gearing (90) is provided for the coupling of the electric drive (3) to the adjustment apparatus (60),
wherein the coupling gearing (90) has a planetary gearing (91),
wherein the planetary gearing (91) of the coupling gearing (90) has a planet carrier (95) with planets (94), which planet carrier is couplable or coupled, at the input side in relation to the coupling gearing (90), directly or indirectly to the electric drive (3) .

2. Drive arrangement (80) according to Claim 1, in which:
- the electric drive (3) has a motor shaft (31) and
- the coupling gearing (90) is coupled or couplable
- directly to the motor shaft (31) and/or
- indirectly via a motor reduction gearing (30), which is coupled or couplable to the motor shaft (31), and in particular via a spur-gear stage (34) thereof,
in particular via a spur-gear stage (99) which is at the input side in relation to the coupling gearing (90).

3. Drive arrangement (80) according to Claim 1 or 2, in which the planetary gearing (91) of the coupling gearing (90) has a common internal gear (92) for internal revolution for the planets (94), which internal gear is in particular couplable or coupled, at the output side in relation to the coupling gearing (90), directly or indirectly to the adjustment apparatus (60), preferably in the manner of an external toothing, which forms a spur gear, on the internal gear (92) and/or by means of a spur-gear stage (98) connected rotationally conjointly to the internal gear (92).

4. Drive arrangement (80) according to one of the preceding claims,
in which, for the coupling of the adjustment apparatus (60) to the electric drive (3) and in particular for the coupling to the coupling gearing (90), a coupling mechanism is provided, said coupling mechanism having a rotatable spindle (62), having a spindle nut (63) which surrounds the spindle (62) and which, with rotation of the spindle (62), is displaceable on the spindle (62), and in particular having a connecting element (64) which is attached to the spindle nut (63) and which serves for connection to the adjustment apparatus (60).

5. Drive arrangement (80) according to Claim 4,
in which the spindle (62) has, at the input side, a spur-gear stage (62-1), in particular for the coupling to the output side of the coupling gearing (90), preferably to the output-side spur-gear stage (98) of the internal gear (92) of the planetary gearing (91) of the coupling gearing (90).

6. Drive arrangement (80) according to one of Claims 2 to 5,
- in which, for the switching capability of the coupling of the electric drive (3) to the adjustment apparatus (60), a clutch (96) is provided which is switchable in controllable fashion, in particular by means of an actuator (97),
- which clutch, in particular,
- is arranged between the sun gear (93) of the planetary gearing (91) of the coupling gearing (90) and a rotationally fixed region of the drive arrangement (80), in particular a housing (14),
- can, in controlled fashion, assume at least a coupled and a decoupled state,
- wherein, in the coupled state, the sun gear (93) of the planetary gearing (91) is held rotationally fixed for the purposes of transmitting at least a part of the motor torque, and
- wherein, in the decoupled state, the sun gear (93) of the planetary gearing (91) is freely rotatable without transmitting motor torque.

7. Drive arrangement (80) according to one of the preceding claims,
which is formed as a central-motor drive and in particular with a housing (14) in which the transmission device (20), the adjustment apparatus, the electric drive (3), the motor reduction gearing (30) and at least a part crankshaft (15) are accommodated.

8. Drive arrangement (80) according to one of the preceding claims,
in which the transmission device (20) has a switchable planetary gearing (21) or a continuously switchable friction-ring gearing (24).

9. Vehicle (1) which can be driven by motor power and in particular additionally by muscle power, an electric bicycle, eBike or pedelec,
having:
- at least one wheel (9-1, 9-2) and
- a drive arrangement (80) as claimed in one of Claims 1 to 8 for driving the at least one wheel (9-1, 9-2).

## Revendications

1. Système d'entraînement (80) pour un véhicule (1), un vélo électrique, un eBike ou un Pedelec, pouvant être entraîné par la force d'un moteur et notamment en outre par la force musculaire, comprenant :
- un entraînement électrique (3) pour générer un couple moteur,
- un vilebrequin (15) pouvant tourner autour d'un axe de rotation (Y) pour recevoir au moins le couple moteur,
- un dispositif de transmission (20) qui est réalisé pour transmettre un couple reçu par le vilebrequin (15) à un élément de prise de force (4) pouvant être accouplé à une roue motrice (9-2) du véhicule (1) et pour effectuer une démultiplication variable de manière commutable, et
- un dispositif de réglage (60) qui est accouplé au dispositif de transmission (20) et dont l'actionnement permet d'ajuster la démultiplication du dispositif de transmission (20),
dans lequel l'entraînement électrique (3) est réalisé pour actionner le dispositif de réglage (60) et peut être accouplé au dispositif de réglage (60) notamment pour transmettre au moins une partie du couple moteur,
**caractérisé en ce que**
pour l'accouplement de l'entraînement électrique (3) au dispositif de réglage (60), il est prévu un engrenage de couplage commutable (90),
l'engrenage de couplage (90) présentant un engrenage planétaire (91),
l'engrenage planétaire (91) de l'engrenage de couplage (90) présentant un porte-satellites (95) avec des satellites (94), lequel porte-satellites est ou peut être accouplé directement ou indirectement du côté de l'entrée, par rapport à l'engrenage de couplage (90), à l'entraînement électrique (3).

2. Système d'entraînement (80) selon la revendication 1, dans lequel :
- l'entraînement électrique (3) présente un arbre de moteur (31) et
- l'engrenage de couplage (90) est ou peut être accouplé
- directement à l'arbre de moteur (31) et/ou
- indirectement par le biais d'un engrenage réducteur de moteur (30) accouplé ou pouvant être accouplé à l'arbre de moteur (31) et notamment par le biais d'un étage de pignon droit (34) de celui-ci,
en particulier par le biais d'un étage de pignon droit (99), du côté de l'entrée par rapport à l'engrenage de couplage (90).

3. Système d'entraînement (80) selon l'une quelconque des revendications 1 et 2, dans lequel l'engrenage planétaire (91) de l'engrenage de couplage (90) présente une couronne commune (92) à l'intérieur de laquelle doivent tourner les satellites (94), laquelle est ou peut être accouplée notamment directement ou indirectement au dispositif de réglage (60), du côté de la sortie par rapport à l'engrenage de couplage (90), de préférence à la manière d'une denture extérieure formant un pignon droit au niveau de la couronne (92) et/ou par le biais d'un étage de pignon droit (98) connecté de manière solidaire en rotation à la couronne (92).

4. Système d'entraînement (80) selon l'une quelconque des revendications précédentes, dans lequel pour l'accouplement du dispositif de réglage (60) à l'entraînement électrique (3) et notamment pour l'accouplement à l'engrenage de couplage (90), il est prévu un mécanisme de couplage avec une broche rotative (62), un écrou de broche (63) entourant la broche (62) et déplaçable sur la broche (62) avec la rotation de la broche (62) et notamment avec un élément de liaison (64) monté sur l'écrou de broche (63) pour établir la liaison avec le dispositif de réglage (60).

5. Système d'entraînement (80) selon la revendication 4, dans lequel la broche (62) présente du côté de l'entrée un étage de pignon droit (62-1), en particulier pour l'accouplement avec le côté de sortie de l'engrenage de couplage (90), de préférence avec l'étage de pignon droit (98) côté sortie de la couronne (92) de l'engrenage planétaire (91) de l'engrenage de couplage (90).

6. Système d'entraînement (80) selon l'une quelconque des revendications 2 à 5,
- dans lequel, pour pouvoir commuter l'accouplement de l'entraînement électrique (3) au niveau du dispositif de réglage (60), il est prévu un embrayage (96) commutable de manière commandable, notamment par le biais d'un actionneur (97),
- lequel notamment
- est disposé entre la roue solaire (93) de l'engrenage planétaire (91) de l'engrenage de couplage (90) et une zone du système d'entraînement (80) solidaire en rotation, en particulier un boîtier (14),
- peut adopter au moins un état accouplé et un état désaccouplé de manière commandée,
- dans l'état accouplé, la roue solaire (93) de l'engrenage planétaire (91) étant retenue de manière solidaire en rotation pour transmettre au moins une partie du couple moteur et
- dans l'état désaccouplé, la roue solaire (93) de l'engrenage planétaire (91) pouvant tourner librement sans transmettre de couple moteur.

7. Système d'entraînement (80) selon l'une quelconque des revendications précédentes, lequel est réalisé sous forme d'entraînement à moteur central et notamment avec un boîtier (14), dans lequel sont reçus le dispositif de transmission (20), le dispositif de réglage, l'entraînement électrique (3), l'engrenage réducteur de moteur (30) et au moins une partie du vilebrequin (15).

8. Système d'entraînement (80) selon l'une quelconque des revendications précédentes, dans lequel le dispositif de transmission (20) présente un engrenage planétaire commutable (21) ou un engrenage à bague de friction (24) commutable de manière continue.

9. Véhicule (1), vélo électrique, eBike ou Pedelec, pouvant être entraîné par la force d'un moteur et notamment en outre par la force musculaire, comprenant :
- au moins une roue (9-1, 9-2) et
- un système d'entraînement (80) selon l'une quelconque des revendications 1 à 8 pour entraîner l'au moins une roue (9-1, 9-2).
